(19) Europäisches Patentamt
European Patent Office
Office européen des brevets

(11) **EP 0 820 396 B1**

(12) **EUROPÄISCHE PATENTSCHRIFT**

(45) Veröffentlichungstag und Bekanntmachung des Hinweises auf die Patenterteilung:
**07.07.1999  Patentblatt 1999/27**

(21) Anmeldenummer: 96909165.1

(22) Anmeldetag: 02.04.1996

(51) Int Cl.⁶: **B60T 13/72**

(86) Internationale Anmeldenummer:
**PCT/EP96/01441**

(87) Internationale Veröffentlichungsnummer:
**WO 96/33084 (24.10.1996 Gazette 1996/47)**

(54) **BREMSANLAGE FÜR KRAFTFAHRZEUGE**

BRAKING SYSTEM FOR MOTOR VEHICLES

SYSTEME DE FREINAGE POUR AUTOMOBILE

(84) Benannte Vertragsstaaten:
**DE FR GB**

(30) Priorität: **20.04.1995  DE 19514591**

(43) Veröffentlichungstag der Anmeldung:
**28.01.1998  Patentblatt 1998/05**

(73) Patentinhaber: **Continental Teves AG & Co. oHG**
**60488 Frankfurt (DE)**

(72) Erfinder:
- **BILL, Karlheinz**
  **D-63303 Dreieich (DE)**
- **KLESEN, Christof**
  **D-35428 Langgöns (DE)**
- **SEMSCH, Martin**
  **D-64291 Darmstadt (DE)**

(56) Entgegenhaltungen:
**DE-A- 3 325 854**

**Beschreibung**

Die Erfindung betrifft eine Bremsanlage für Kraftfahrzeuge mit einem regelbaren pneumatischen Bremskraftverstärker sowie einem Hauptbremszylinder, wobei das Steuerventil des Brems-kraftverstärkers einerseits mittels eines Betätigungspedals betätigbar und andererseits unabhängig vom Fahrerwillen mittels eines Elektromagneten ansteuerbar ist, mit einer Anordnung zum Ermitteln der am Betätigungspedal wirkenden Betätigungskraft, sowie mit einem elektronischen Regler, dessen Steuersignale der Ansteuerung des Elektromagneten dienen.

Bei einer kombinierten Betätigung des Bremskraftverstärkers durch die Fremdansteuerung und die auf das Betätigungspedal einwirkende Betätigungskraft ist bei einigen denkbaren Anwendungen, z.B. einer Fahrstabilitätsregelung, die Kenntnis der Betätigungskraft erforderlich.

Durch die DE 33 25 854 C2 ist ein Bremsregler zum Regeln einer Fahrzeugbremsanlage bekannt geworden, der mit einem unabhängig vom Fahrerwillen vorzugsweise elektrisch ansteuerbaren Brems-kraftverstärker zusammenwirkt. Die erwähnte elektrische Ansteuerung erfolgt mittels eines außerhalb des Bremskraftver-stärkers angeordneten Regelventils, das einen im Verstärker-gehäuse einsteuerbaren pneumatischen Differenzdruck beeinflußt und dem Steuersignale einer Datenverarbeitungsanlage zugeführt werden, die als Eingangsgrößen Signale zweier Sensoranordnungen verarbeitet. Die erste Sensoranordnung besteht aus einem Geschwindigkeitssensor, dessen Signale differenziert werden, um die Fahrzeugverzögerung zu ermitteln. Die zweite Sensoranordnung wird durch einen Kraftsensor gebildet, der der Ermittlung der an einem Betätigungspedal wirkenden Betätigungskraft dient. Die Datenverarbeitungsanlage enthält statische Kennlinien, aus denen Sollwerte der Verzögerung ermittelt werden.

Weniger vorteilhaft anzusehen ist bei dem vorbekannten Regler die Verwendung des Kraftsensors zur Ermittlung der erwähnten Betätigungskraft, der in der Betätigungsstange des Bremskraftverstärkers eingebaut werden muß. Der Einbau des Kraftsensors ist einerseits mit einem hohen konstruktiven Aufwand und andererseits mit Problemen verbunden, die auf einen begrenzten Einbauraum zurückzuführen sind.

Es ist daher Aufgabe der vorliegenden Erfindung Maßnahmen vorzuschlagen, die eine indirekte Ermittlung der auf das Betätigungspedal einwirkenden Betätigungskraft ermöglichen.

Diese Aufgabe wird erfindungsgemäß dadurch gelöst, daß die Anordnung durch einen ersten Sensor zum Ermitteln des im Hauptbremszylinder eingesteuerten hydraulischen Druckes, einen zweiten Sensor zum Ermitteln des im Bremskraftverstärker eingesteuerten pneumatischen Differenzdruckes sowie den elektronischen Regler gebildet ist, der aus den von den Sensoren gelieferten Signalen ein drittes Signal berechnet, das die Betätigungskraft repräsentiert.

Die Berechnung des dritten Signals erfolgt dabei vorzugsweise nach der im Anpruch 2 aufgeführten Formel.

$$F_{ped} = F(THZ) - F(Verst.) - F(Stör) =$$

$$= P_{hyd} * A(THZ) - P_{diff} * A(bW) - F(Stör)$$

wobei mit

| | |
|---|---|
| F(THZ) | die auf den Hauptzylinderkolben wirkende Ausgangs kraft des Bremskraftverstärkers, |
| F(Verst.) | die Verstärkungskraft des Bremskraftverstärkers |
| $P_{hyd}$ | der im Hauptbremszylinder eingesteuerte hydraulische Druck, |
| $P_{diff}$ | der im Bremskraftverstärker eingesteuerte -pneumatische Differenzdruck , |
| A(THZ) | die Fläche des Hauptzylinderkolbens, |
| A(bW) | die aktive Fläche einer die Verstärkungskraft des Bremskraftverstärkers aufbringenden beweglichen Wand und |
| F(Stör) | im System auftretende Stör- bzw. Verlustkräfte |

bezeichnet sind.

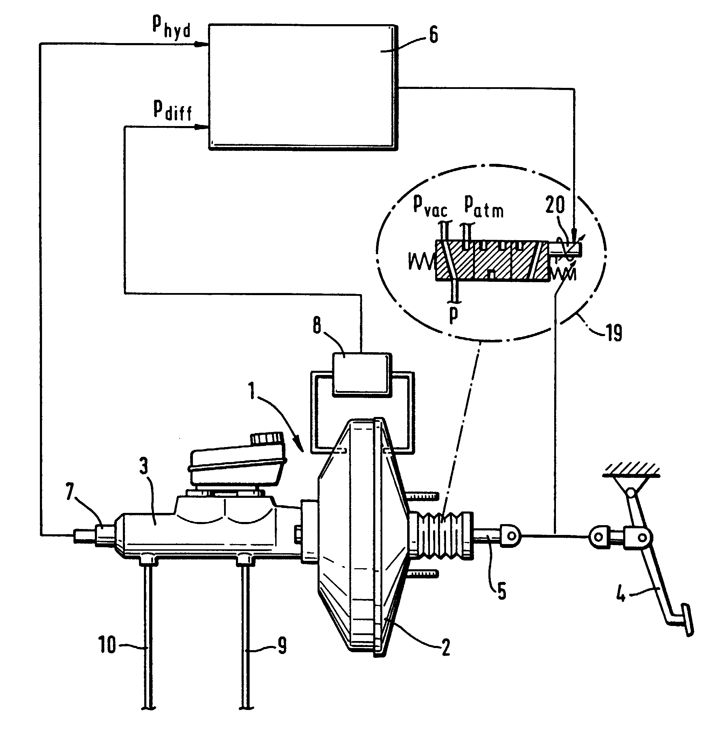

In der Zeichnung zeigt die einzige Figur eine Ausführung der erfindungsgemäßen Bremsanlage in schematischer Darstellung.

Die in der Zeichnung lediglich schematisch dargestellte erfindungsgemäße Bremsanlage für Kraftfahrzeuge weist eine Betätigungseinheit 1 sowie einen elektronischen Regler 6 auf. Die Betätigungseinheit 1 besteht aus einem mittels eines Betätigungspedals 4 betätigbaren pneumatischen Bremskraft-verstärker, vorzugsweise einem Unterdruckbremskraftverstärker 2, dem ein Hauptbremszylinder, vorzugsweise ein Tandemhauptzylinder 3, nachgeschaltet ist, an dessen nicht gezeigte Druckräume über hydraulische Leitungen 9, 10 nicht dargestellte Fahrzeugbremsen angeschlossen sind. An das Betätigungspedal 4 ist eine Betätigungsstange 5 angekoppelt, die eine Betätigung eines lediglich schematisch angedeuteten Steuerventils 19 ermöglicht, das den Aufbau eines pneu-matischen Differenzdruckes im Gehäuse des Unterdruckbremskraftverstärkers 2 steuert. Ein durch Steuersignale des elektronischen Reglers 6 ansteuerbarer Elektromagnet 20 ermöglicht dabei eine vom Fahrerwillen unabhängige Betätigung bzw. Fremdbetätigung des Steuerventils 19. Eine nicht gezeigte bewegliche Wand teilt den Innenraum des Verstärkergehäuses in eine Unterdruckkammer sowie eine Arbeitskammer, wobei die Unterdruckkammer in ständiger Verbindung mit einer geeigneten Unterdruckquelle steht, während die Arbeitskammer durch Betätigung des Steuerventils 19 in Verbindung mit der Atmosphäre gebracht wird.

Es ist bekannt, daß bei der Betätigung des Unterdruckbremskraftverstärkers 2 in den Druckräumen des Tandemhauptzylinders 3 ein hydraulischer Druck aufgebaut wird, der über die erwähnten Leitungen 9, 10 den Fahrzeugbremsen zugeführt wird. Um eine Information über den im Hauptzylinder 3 eingesteuerten Druck zu erhalten ist ein Drucksensor 7 vorgesehen, der vorzugsweise an den Sekundärdruckraum des Hauptbrems-zylinders 3 angeschlossen ist und dessen Signal $P_{hyd}$ dem elektronischen Regler 6 zugeführt wird. Ein zweites, den im Verstärkergehäuse bei der Betätigung sich aufbauenden pneu-matischen Differenzdruck repräsentierendes Signal $P_{diff}$, das ebenso dem Regler 6 zur Verfügung gestellt wird, wird von einem an die beiden Kammern des Unterdruckbremskraftverstärkers 2 angeschlossenen Differenzdrucksensor 8 geliefert, der beispielsweise direkt an der beweglichen Wand des Unterdruckbremskraftverstärkers 2 montiert werden kann. Aus beiden Signalen $P_{hyd}$ und $P_{diff}$ wird im elektronischen Regler 6 die am Bremspedal 4 eingeleitete Betätigungskraft $F_{ped}$ indirekt ermittelt bzw. nach der folgenden Formel berechnet:

$$F_{ped} = F(THZ) - F(Verst.) - F(Stör) =$$

$$= P_{hyd} * A(THZ) - P_{diff} * A(bW) - F(Stör).$$

Mit A(THZ) ist dabei die Fläche des Hauptzylinderkolbens bezeichnet, während A(bW) die aktive Fläche der vorhin erwähnten, die Verstärkungskraft des Bremskraftverstärkers aufbringenden beweglichen Wand bedeutet. Mit F(Stör) sind schließlich sämtliche im System auftretenden Stör- bzw. Verlustkräfte, wie z.B. Reibungskräfte und insbesondere der Einfluß einer die bewegliche Wand entgegen der Betätigungsrichtung vorspannenden, nicht gezeigten Rückstellfeder bezeichnet.

## Patentansprüche

1. Bremsanlage für Kraftfahrzeuge mit (2) einem regelbaren pneumatischen Bremskraftverstärker (2) sowie einem Hauptbremszylinder (3), wobei das Steuerventil (19) des Bremskraftverstärkers (2) einerseits mittels eines Betätigungspedals (4) betätigbar und andererseits unabhängig vom Fahrerwillen mittels eines Elektromagneten ansteuerbar ist, mit einer Anordnung zum Ermitteln der am Betätigungspedal wirkenden Betätigungskraft, sowie mit einem elektronischen Regler (6), dessen Steuersignale der Ansteuerung des Elektromagneten (20) dienen, dadurch **gekennzeichnet,** daß die Anordnung durch einen ersten Sensor (7) zum Ermitteln des im Hauptbremszylinder (3) eingesteuerten hydraulischen Druckes, einen zweiten Sensor (8) zum Ermitteln des im Bremskraftverstärker (2) eingesteuerten pneumatischen Differenzdruckes sowie den elektronischen Regler (6) gebildet ist, der aus den von den Sensoren (7,8) gelieferten Signalen ein drittes Signal (Fped) berechnet, das der Betätigungskraft entspricht.

2. Bremsanlage für Kraftfahrzeuge nach Anspruch 1 dadurch **gekennzeichnet,** daß die Berechnung des dritten Signals nach der Formel

$$F_{ped} = F(THZ) - F(Verst.) - F(Stör) =$$

$$= P_{hyd} * A(THZ) - P_{diff} * A(bW) - F(Stör)$$

erfolgt, wobei mit

| | |
|---|---|
| F(THZ) | die auf den Hauptzylinderkolben wirkende Ausgangskraft des Bremskraftverstärkers, |
| F(Verst.) | die Verstärkungskraft des Bremskraftverstärkers |
| $P_{hyd}$ | der im Hauptbremszylinder eingesteuerte hydraulische Druck, |
| $P_{diff}$ | der im Bremskraftverstärker eingesteuerte pneumatische Differenzdruck . |
| A(THZ) | die Fläche des Hauptzylinderkolbens, |
| A(bW) | die aktive Fläche einer die Verstärkungskraft des Bremskraftverstärkers aufbringenden beweglichen Wand und |
| F(Stör) | im System auftretende Stör- bzw. Verlustkräfte |

bezeichnet sind.

## Claims

1. Brake system for automotive vehicles including a controllable pneumatic brake power booster (2) and a master brake cylinder (3), wherein a control valve (19) of the brake power booster (2) is operable by an actuating pedal (4), on the one hand, and is actuatable by a solenoid irrespective of the driver's wish, on the other hand, including an arrangement for determining the actuating force applied to the actuating pedal, and an electronic controller (6) having control signals which are used to activate the solenoid (20),
**characterized** in that the assembly includes a first sensor (7) for determining the hydraulic pressure introduced into the master brake cylinder (3), a second sensor (8) for determining the pneumatic differential pressure introduced into the brake power booster (2), and the electronic controller (6) which calculates a third signal (Fped), representative of the actuating force, from the signals sent by the sensors (7, 8).

2. Brake system for automotive vehicles as claimed in claim 1, **characterized** in that the third signal is calculated pursuant the relation

$$F_{ped} = F(THZ) - F(Verst.) - F(Stör) =$$

$$= P_{hyd} * A(THZ) - P_{diff} * A(bW) - F(Stör)$$

and

F(THZ)  is the output force of the brake power booster applied to the master cylinder piston,

F(Verst.)  is the boosting force of the brake power booster,

$P_{hyd}$  is the hydraulic pressure introduced into the master brake cylinder,

$P_{diff}$  is the pneumatic differential pressure introduced into the brake power booster,

A(THZ)  is the surface of the master cylinder piston,

A(bW)  is the active surface of a movable wall which generates the boosting force of the brake power booster, and

F(Stör)  designates the disturbance forces or dissipative forces occurring in the system.

**Revendications**

1. Système de freinage, pour véhicule automobile, comprenant un amplificateur de force de freinage (2) pneumatique et réglable, un maître-cylindre de frein (3), la valve de commande (19) de l'amplificateur de force de freinage (2) pouvant être commandée d'une part au moyen d'une pédale d'actionnement (4) et d'autre part, indépendamment de la volonté du conducteur, au moyen d'un électroaimant, un agencement de déterminations de la force d'actionnement s'exerçant sur la pédale d'actionnement, et un régulateur électronique (6) dont des signaux de commande servent à commander l'électroaimant (20), caractérisé en ce que l'agencement est constitué d'un premier capteur (7) servant à déterminer la pression hydraulique appliquée d'une manière commandée dans le maître-cylindre de frein (3), d'un second capteur (8) servant à déterminer la pression pneumatique différentiell appliquée d'une manière commandée dans l'amplificateur de force de freinage (2), et du régulateur électronique (6) qui, à partir des signaux fournis par les capteurs (7, 8), calcule un troisième signal ($F_{péd}$) qui correspond à la force d'actionnement.

2. Système de freinage pour véhicule automobile suivant la revendication 1, caractérisé en ce que le calcul du troisième signal s'effectue suivant la formule :

$$F_{péd} = F(THZ) - F(Verst.) - F(Stör)$$

$$= P_{hyd} * A(THZ) - P_{diff} * A(bW) - F(Stör)$$

dans laquelle

F(THZ) désigne la force de sortie de l'amplificateur de force de freinage s'exerçant sur le piston de maître-cylindre,
F(Verst.) la force d'amplification de l'amplificateur de force de freinage,
$P_{hyd}$ la pression hydraulique appliquée d'une manière commandée dans le maître-cylindre de frein,
$P_{diff}$ la pression pneumatique différentielle appliquée d'une manière commandée dans l'amplificateur de force de freinage,
A(THZ) l'aire du piston de maître-cylindre,
A(bW) la surface active d'une paroi mobile appliquant la force d'amplification de l'amplificateur de force de freinage et
F(Stör) les forces perturbatrices ou de pertes se présentant dans le système.

$p_{hyd}$

6

$p_{diff}$

$p_{vac}$   $p_{atm}$   20

P

19

8

1

3

7

10   9

2

5

4